# EUROPEAN PATENT SPECIFICATION

(11) **EP 0 370 748 B1**
(45) Date of publication and mention of the grant of the patent: **21.04.1993**
(21) Application number: 89312038.6
(22) Date of filing: 21.11.1989
(51) Int. Cl.: B60C 11/00, B60C 9/20

(54) **Pneumatic tyre**
Luftreifen
Bandage pneumatique

(30) Priority: 25.11.1988 JP 153818/88
(43) Date of publication of application: 30.05.1990
(73) Proprietor: SUMITOMO RUBBER INDUSTRIES LIMITED, Chuo-ku Kobe-shi Hyogo 651 (JP)
(72) Inventor: Tamano, Akiyoshi, Kobe-shi Hyogo (JP); Kakumu, Kiichiro, Kobe-shi Hyogo (JP)
(74) Representative: Stewart, Charles Geoffrey

(56) References cited:
- EP-A- 0 166 154
- DE-A- 2 824 299

## Description

This invention relates to a pneumatic tyre, and particularly to a pneumatic tyre tread pattern for use on a passenger car.

Conventionally, a pneumatic tyre has a so-called pitch-variation tread pattern in order to reduce noises produced by the tread pattern. The term "pitch-variation pattern" means that the pitch of the pattern elements, such as the pitch of zigzag intervals of grooves and/or the length of the tread blocks in the circumferential direction of the tyre, is varied or different (hereinafter referred to as irregular pitch") so as to distribute the frequencies of the noises, produced by the pattern elements over a wide range, thereby preventing the overall noise from becoming harsh or offensive.

Although the above irregular pitch arrangement is effective in the reduction of the noise produced by a tyre, the rigidity of the pattern elements varies due to the variations in the pitch. As a result, variations in forces (hereinafter referred to as "force variations") exerted in both the forward-and-rearward direction and upward-and-downward directions with respect to the vehicle of the tyre are increased. On the other hand, joints and the regions around joints between component parts of the tyre also make the tyre properties uneven in the circumferential direction of the tyre, and therefore such joint portions also serve to increase force variations.

When the force variation is large, it causes vibrations during running of the tyre which are provided in the vehicle.

It is therefore an object of this invention to provide a pneumatic tyre the uniformity of which is improved.

Accordingly the present invention provides a pneumatic tyre including a tread having a plurality of rows of pattern elements extending in the circumferential direction of the tyre to provide a tread pattern, the pitch of each row of pattern elements being varied in the circumferential direction of the tyre characterised in that a joint portion of one of the outer components of the tyre is positioned in a region of the tyre where the pattern elements whose pitch is different to the average pitch are consecutively provided over a range of at least 8% of the entire circumference of the tread, so that the rigidity of the joint portion is balanced by the resultant rigidity of the pattern elements in said zone to reduce the radial force variation in the tyre.

Preferably the joint portion of the tread is positioned in the region of the tyre where those pattern elements whose pitch is less than the average pitch are consecutively provided over a range of at least 8% of the entire circumference of the tread. Alternatively, or additionally the tyre includes a steel belt and a reinforcement layer of organic fibre cords arranged around the belt and the joint portion of the reinforcement layer is disposed in the region of the tyre where those pattern elements whose pitch is greater than the average pitch are consecutively provided over a range of at least 8% of the entire circumference of the tread.

An embodiment of the present invention will now be described by way of example only in conjunction with the attached figures in which:-
Fig.1. is a cross sectional view of a portion of a pneumatic tyre in accordance with the present invention; and
Fig.2. is a diagrammatical illustration showing variations of upward and downward forces developing in the tyre during running.

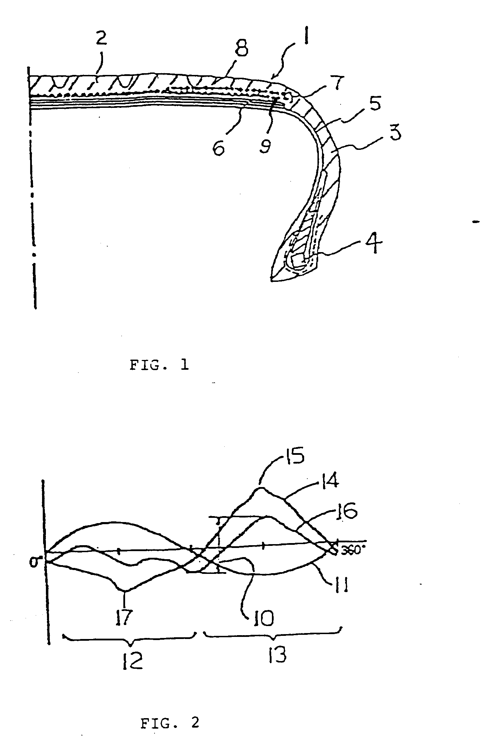

The pneumatic tyre 1 shown in Fig.1. has a carcass 5 extending from one sidewall 3 to the other sidewall through a tread 2. Opposite edge portions of the carcass 5 are turned or folded around bead cores 4, respectively. A steel belt 6 is arranged around the carcass 5, the steel belt 6 comprising at least two steel cord plies each composed of a number of parallel steel cords. A reinforcement layer 7 made of organic fabric cords is arranged around the steel belt 6. The reinforcement layer 7 7 also comprises a full band reinforcement layer 8 covering the entire width of the steel belt 6, and a pair of edge band reinforcement layers 9 interposed between the full band reinforcement layer 8 and the steel belt and respectively covering the lateral edge portions of the steel belt 6.

The joint portion of the tread 2 is disposed at that region of the tyre where those pattern elements whose pitch is less than the average pitch are consecutively provided over a range of at least 8 % of the entire circumference of the tread. If this range is less than 8% then it does not sufficiently reduce the rigidity to a level sufficient to reduce the radial force variation or RFV caused by the tread joint portion.

The joint portion of the reinforcement layer 7 is usually constituted by overlapping the opposite ends of the organic fabric cord layer over a short distance. This overlapped portion is circumferentially displaced out of position by the circumferential tension caused by the internal pressure produced during the vulcanising process. As a result, a recess is formed in the tread surface, and such a recess could reduce the aforesaid upward and downward force in the first led tyre when on a vehicle. However, the joint portion of the reinforcement layer is particularly positioned at that region of the tyre where there are arranged those pattern elements whose pitch is greater than the average pitch. Thus with this construction, the contributions of those pattern elements and the joint portion of the reinforcement layer to RFV cancel each other, thereby preventing vibrations from occurring.

It is necessary that the joint portion of the reinforcement layer 7 should be positioned in the region where those pattern elements whose pitch is greater than the average pitch are consequently provided over a range of at least 8% of the entire circumference of the tread 2. If this range is less than 8% the rigidity is not increased to a high enough level to cancel the RFV caused by the joint portion of the reinforcement layer.

Fig.2 shows one example of force variations of a tyre. The ordinate axis indicates the magnitudes of the upward and downwards force produced in running of the tyre. Arrow 10 indicates the extent of variation of such force (hereinafter referred to as the "RFV"). The abscissa axis indicates the circumferential position of the tyre in terms of angle about the axis of rotation of the tyre. Curve 11 shows the variations of the upward and downward force caused by rigidity variations due to pitch variations. Reference numeral 12 denotes that region of the tyre where there are arranged the pattern elements whose pitch is greater than the average pitch.

Since the pattern elements in the region 12 are relatively large, the region 12 has an increased rigidity and therefore produces an increased upward and downward force as a reaction force. Reference numeral 13 denotes that region of the tyre where there are arranged the pattern elements whose pitch is less than the average pitch. Since the pattern elements in the region 13 are relatively small, the region 13 has a reduced rigidity and therefore produces a reduced upward and downward force as a reaction force.

Curve 14 shows the variations of the upward and downward force caused by uneven portions inherent to the tyre construction. The variation due to joint portion of the tyre tread is very large, and therefore the upward and downward force at that portion is large. Reference numeral 15 in Fig.15. 2 indicates the position of the tread joint.

In the present invention, the tread joint portion is disposed at the region 13 where the relatively small pattern elements are arranged. With this construction, the contributions of these small pattern elements and the tread joint portion to RFV cancel each other, thereby preventing vibration from developing. Curve 16 shows the resultant variations of the overall upward and downward force (the sum of the upward and downward forces caused by the pattern elements and the tread joint portion.

The joint portion of the tread is disposed at that region of the tyre where those pattern elements whose pitch is less than the average pitch are consecutively provided over a range of at least 8% of the entire circumference of the tread. If this range is less than 8%, the rigidity can not be reduced to a level enough to cancel RFV caused by the tread joint.

Further, in a tyre of the type having a reinforcement layer of organic fabric cords arranged around the belt layer of the tyre, the joint portion of the reinforcement layer much contributes to RFV. The above second aspect of the invention seeks to overcome this problem.

Fig.2 reference numeral 17 indicates variation caused by the joint portion of the reinforcement layer.

As described above, the uneveness in rigidity of the tyre in its circumferential direction (which uneveness has been inevitably caused by the pitch variations of the pattern elements of the tread pattern) can be effectively improved without reducing the noise reducing effects.

## Claims

1. A pneumatic tyre including a tread (2) having a plurality of rows of pattern elements extending in the circumferential direction of the tyre to provide a tread pattern, the pitch of each row of pattern elements being varied in the circumferential direction of the tyre characterised in that a joint portion of one of the outer components of the tyre, i.e. tread (2) and reinforcement layer (7), is positioned in a region of the tyre where the pattern elements whose pitch is different to the average pitch are consecutively provided over a range of at least 8% of the entire circumference of the tread, so that the rigidity of the joint portion is balanced by the resultant rigidity of the pattern elements in said zone to reduce the radial force variation in the tyre.

2. A pneumatic tyre according to claim 1 characterised in that the joint portion of the tread (2) is positioned in the region of the tyre where those pattern elements whose pitch is less than the average pitch are consecutively provided over a range of at least 8% of the entire circumference of said tread (2).

3. A pneumatic tyre according to claim 1 or 2 characterised in that the tyre includes a steel belt (6) comprising at least two steel cord plies each composed of a number of parallel steel cords, a reinforcement layer (7) made of organic fibre cords arranged around said steel belt (6) wherein a joint portion of said reinforcement layer (7) is disposed in the region of the tyre where those pattern elements whose pitch is greater than the average pitch are consecutively provided over a range of at least 8% of the entire circumference of said tread.

## Patentansprüche

1. Luftreifen umfassend eine Lauffläche (2) mit einer Vielzahl von Reihen aus Musterelementen, die sich in Umfangsrichtung des Reifens erstrecken, um ein Laufflächenmuster zu schaffen, wobei sich die Teilung einer jeden Reihe aus Musterelementen in Umfangsrichtung des Reifens ändert, dadurch **gekennzeichnet,**
daß ein Verbindungsbereich von einer der äußeren Komponenten des Reifens, d.h. Lauffläche (2) und Verstärkungslage (7), in einem Bereich des Reifens angeordnet ist, in dem die Musterelemente, deren Teilung verschieden gegenüber der Durchschnittsteilung ist, fortlaufend über einen Bereich von zumindest 8 % des gesamten Laufflächenumfangs vorgesehen werden, so daß die Steifheit des Verbindungsbereichs durch die resultierende Steifheit der Musterelemente in dem Bereich ausgeglichen ist, um die radiale Kraftänderung im Reifen zu reduzieren.

2. Luftreifen nach Anspruch 1,
dadurch **gekennzeichnet,**
daß der Verbindungsbereich der Lauffläche (2) in dem Bereich des Reifens angeordnet ist, in dem diejenigen Musterelemente, deren Teilung geringer ist als die Durchschnittsteilung, fortlaufend über einen Bereich von zumindest 8 % des gesamten Umfangs der Lauffläche (2) vorgesehen sind.

3. Luftreifen nach Anspruch 1 oder 2,
dadurch **gekennzeichnet,**
daß der Reifen einen Stahlgürtel (6) umfaßt, der zumindest zwei Stahlkordlagen umfaßt, von denen jede aus einer Anzahl von parallelen Stahlkorden zusammengesetzt ist, eine Verstärkungslage (7), die aus organischen Faserkorden hergestellt und um den Stahlgürtel (6) angeordnet ist, wobei ein Verbindungsbereich der Verstärkungslage (7) in dem Bereich des Reifens angeordnet ist, in dem diejenigen Musterelemente, deren Teilung größer ist als die Durchschnittsteilung, nacheinander über einen Bereich von zumindest 8 % des gesamten Laufflächenumfangs vorgesehen sind.

## Revendications

1. Pneumatique comprenant une bande de roulement (2) ayant plusieurs lignes d'éléments de sculpture placées dans la direction circonférentielle du pneumatique pour la formation d'une sculpture de bande de roulement, le pas de chaque ligne d'éléments de sculpture variant dans la direction circonférentielle du pneumatique, caractérisé en ce qu'une partie de raccord de l'un des éléments constituants externes du pneumatique, c'est-à-dire la bande de roulement (2) et la couche d'armature (7), est disposée dans une région du pneumatique dans laquelle les éléments de sculpture dont le pas est différent du pas moyen sont placés consécutivement sur une plage au moins égale à 8 % de la circonférence totale de la bande de roulement, si bien que la rigidité de la partie de raccord est compensée par la rigidité résultante des éléments de sculpture dans cette zone et réduit la variation de force radiale dans le pneumatique.

2. Pneumatique selon la revendication 1, caractérisé en ce que la partie de raccord de la bande de roulement (2) est disposée dans la région du pneumatique dans laquelle les éléments de sculpture dont le pas est inférieur au pas moyen sont disposés consécutivement sur une plage d'au moins 8 % de la totalité de la circonférence de la bande de roulement (2).

3. Pneumatique selon la revendication 1 ou 2, caractérisé en ce que le pneumatique comporte une ceinture (6) d'acier comprenant au moins deux nappes de câblés d'acier, composées chacune d'un certain nombre de câblés parallèles d'acier, une couche d'armature (7) formée de câblés de fibres organiques disposée autour de la ceinture d'acier (6), et dans lequel une partie de raccord de la couche d'armature (7) est disposée dans la région du pneumatique dans laquelle les éléments de sculpture dont le pas est supérieur au pas moyen sont placés consécutivement sur une plage au moins égale à 8 % de la circonférence totale de la bande de roulement.
